# EUROPEAN PATENT APPLICATION

(11) **EP 1 692 950 A1**
(43) Date of publication of application: **23.08.2006**
(21) Application number: 04820280.8
(22) Date of filing: 09.12.2004
(51) Int. Cl.: A23L 1/10, A23L 1/172, C12C 1/02

(54) **PROCESSED WHEAT PRODUCT CONTAINING FUNCTIONAL COMPONENTS IN ELEVATED AMOUNTS AND PROCESSING METHOD THEREFOR**

(30) Priority: 11.12.2003 JP 2003413190
(71) Applicant: Sapporo Breweries Limited, Tokyo 150-8522 (JP)
(72) Inventor: KIHARA, Makoto, Sapporo Breweries Limited, Nitta-Gun, Gunma 370-0393 (JP); OKADA, Yoshihir, Sapporo Breweries Limited, Nitta-Gun, Gunma 370-0393 (JP); ISHIKAWA, Osamu, Sapporo Breweries Limited, Nitta-Gun, Gunma 370-0393 (JP); ITO, Kazutoshi, Sapporo Breweries Limited o, Nitta-Gun, Gunma 370-0393 (JP)
(74) Representative: Billington, Lawrence Emlyn
(86) International application number: PCT/JP2004/018407
(87) International publication number: WO 2005/055742

(57) **Abstract**

It is intended to provide processed products of wheat, barley, oats and rye and its processing method, in which any functional ingredients are increased with balanced, and originally physical properties and quality that are demanded by inhibiting activity of an unnecessary enzyme are held.

Depending on functional ingredients condition of targeted free amino acids like GABA or dietary fibers, by soaking process of seeds of wheat, barley, oats and rye, controlling germination days after soaking, controlling the drying temperature and controlling the gibberellin process, then wheat, barley, oats and rye, in which functional ingredients contents such as GABA, free amino acids and dietary fibers can be increased, can be obtained. Then, the extraction process from seeds of wheat, barley, oats and rye is controlled and the extraction method is suited for extracting the targeted functional ingredients like GARA and β-glucan. Thus, the method for increasing functional ingredients contents and processed products by its method can be provided. Therefore, foods comprising increased functional ingredients contents such as GABA and β-glucan can be provided by including wheat, barley, oats and rye or processed products of wheat, barley, oats and rye which has increased functional ingredients contents as raw materials in foods.

## Description

### BACKGROUND OF THE INVENTION

### 1. Field of the Invention

This invention generally relates to processed products of wheat, barley, oats and rye including lots of functional ingredients such as free amino acid or dietary fibers and its processing method. More detail, this invention relates to a processing method of wheat, barley, oats and rye for increasing functional ingredients in seeds of wheat, barley, oats and rye and processed products of wheat, barley, oats and rye which has an increased functionality thereby.

### 2. Description of the Related Art

Conventionally, amino acid or dietary fibers are called functional ingredients and they are used as food additives for food processing. It ia reported that amino acids have various functions and an improvement of functions and quality of foods can be possible by using as food additives within foods. For example, valine is used for improving a flavor of various foods. Also, recently, an gamma-aminobutyric acid called GABA is used. It is widely spreaded in nature and it is one type of amino acids...Its chemical formula is NH₂CH₂CH₂CH₂COOH. It is known that GABA acts as a neurotransmitter of a restraint system in human body. In addition, it is known as GABA acts as depressing blood pressure, stabilizing a mind of human beings, improving kidney and liver function, and promoting alcohol metabolism.

Dietary fibers have various functions like operation to keep well-condition of the bowels and restraint operation of high sugar level in blood. So, water products including dietary fibers are manufactured.

It is well-known for persons who the art that processed products of grains which is germinated grains such as germinated unpolished rice as the food material which included a lots of these functional ingredients in richness. (For example, see patent documents 1 and 2)

On the other hand, concerning wheat, barley, oats and rye among the grains, wheat and rye are used widely as food raw materials such as bread, Soba (Japanese noodle), udon (Japanese noodle), pasta. Also, barley makes germinate and it is processed to so-called malt, and it is used as raw materials for brewing such as beer, low-malt beer and whiskey. Also, the malt flour which crushed malt is used by fermentation promotion at the time of bread production. (For example, see non-patent documents 1)

Moreover, it is well-known for persons who in the art that as food material including functional ingredients, germinated wheat contains amino acids as functional ingredients, oats contains β**-**glucan as a dietary fiber, barley contains functional ingredients of free amino acids and dietary fibers (β-glucan).

However, according to researches of the present inventors, in the case of processing to food materials or food additives which have functional ingredients in richness, it is recognized that functional ingredients contents depend on its processing conditions and the large increase or decrease of functional ingredients contents is occurred. Also, even though same processing condition is processed, a changing tendency is different (that is, the functional ingredient A content is increasing, but the functional ingredient B content is decreasing) due to individual functional ingredient, it is recognized that the most suitable processing method or degree of processing is need to be set depending on functional ingredient which wants to be high content. Here, processing conditions means that soaking time of water or warm water of barley seeds, the germination days of barley, dry (roasted dry) temperature and time, extraction temperature and time in the case of functional ingredients are extracted from barley seeds and germinated barley. Also, there are various enzymes in barley and it needs to inhibit activity of their enzymes because activity of enzymes could change food's original physical properties and its quality due to foods which are used.

These problems are problems common to wheat, barley, oats and rye, not limited to only barley.
Patent document 1:JP2003-250512
Patent document 2:JP2003-159017
Non-patent document 1:Briggs, Malts and Malting, 1998, p.9

### SUMMARY OF THE INVENTION

It is a general object of the present invention to provide processed products of wheat, barley, oats and rye and its processing method, in which any functional ingredients are increased with balanced, and originally physical properties and quality that are demanded by inhibiting activity of an unnecessary enzyme are held.

In order to achieve the above-mentioned object, as described in claim 1, there is provided a processing method of processed products of wheat, barley, oats and rye,
characterised that seeds of wheat, barley, oats and rye are soaked in water or hot water for predetermined time.

According to claim 1, by soaking seeds of wheat, barley, oats and rye in water or hot water for predetermined time, the processing method of processed products of wheat, barley, oats and rye, in which functional ingredients contents such as free amino acids like GABA and dietary fibers is adjusted, can be provided.

In order to achieve the above-mentioned object, as described in claim 2, there is provided a processing method of processed products of wheat, barley, oats and rye,
characterized that after seeds of wheat, barley, oats and rye are soaked in water or hot water for predetermined time, a germination process is performed, then any functional ingredients contents in seeds of wheat, barley, oats and rye are adjusted by controlling the germination process.

According to claim 2, after seeds of wheat, barley, oats and rye are soaked in water or hot water for predetermined time, the germination process is performed, then by controlling the germination process, functional ingredients contents such as free amino acids like GABA and dietary fibers can be adjusted, also protease activity and enzymatic activity of decomposition of dietary fibers can be controlled, and the processing method of processed products which has increased functional ingredients contents and protease activity and enzymatic activity of decomposition of dietary fibers are controlled can be provided.

In order to achieve the above-mentioned object, as described claim 3, there is also provided, a processing method of processed products of wheat, barley, oats and rye,
characterized that after seeds of wheat, barley, oats and rye are soaked in water or hot water for predetermined time, a drying process is performed at predetermined temperature, then any functional ingredients contents in seeds of wheat, barley, oats and rye are adjusted by controlling the temperature of the drying process.

According to claim 3, after seeds of wheat, barley, oats and rye are soaked in water or hot water for predetermined time, a drying process is performed at predetermined temperature, then by controlling the temperature of the drying process, the processing method of processed products of wheat, barley, oats and rye, in which functional ingredients contents such as free amino acids like GABA and dietary fibers can be adjusted, can be provided.

In order to achieve the above-mentioned object, as described claim 4, there is also provided, a processing method of processed products of wheat, barley, oats and rye,
characterized that after seeds of wheat, barley, oats and rye are soaked in water or hot water for predetermined time, a gibberellin process is performed.

According to claim 4, after seeds of wheat, barley, oats and rye are soaked in water or hot water for predetermined time and the gibberellin process is performed, the processing method of processed products of wheat, barley, oats and rye, in which functional ingredients contents such as free amino acids like GABA and dietary fibers can be increased, can be provided.

In order to achieve the above-mentioned object, as described in claim 5, there is also provided a processing method of processed products of wheat, barley, oats and rye,
characterized that seeds of wheat, barley, oats and rye are soaked in water or hot water which are included the gibberellin for predetermined density.

According to claim 5, by soaking seeds of wheat, barley, oats and rye in water or hot water which are included the gibberellin for predetermined density, the processing method of processed products of wheat, barley, oats and rye, in which functional ingredients contents such as free amino acids like GABA and dietary fibers can be increased, can be provided.

In order to achieve the above-mentioned object, as described claim 6, there is also provided a processing method of processed products of wheat, barley, oats and rye,
in which an extraction solution extracted functional ingredients from seeds of wheat, barley, oats and rye is produced by soaking seeds of wheat, barley, oats and rye or an processed seeds obtained by processing the seeds in an extraction solvent, an extraction volume of any functional ingredients is adjusted by controlling the temperature of the extraction solvent.

According to claim 6, an extraction solution extracted functional ingredients from seeds of wheat, barley, oats and rye is produced by soaking seeds of wheat, barley, oats and rye or an processed seeds obtained by processing the seeds in an extraction solution, by controlling the temperature of the extraction solvent, processing method of processed products of wheat, barley, oats and rye, in which the extraction volume of targeted functional ingredients such as free amino acids like GABA and dietary fibers can be adjusted, can be provided.

In order to achieve the above-mentioned object, as described claim 7, there is also provided a processing method of processed products of wheat, barley, oats and rye,
in which an extraction solution extracted functional ingredients from seeds of wheat, barley, oats and rye is produced by soaking an processed seeds obtained by processing seeds of wheat, barley, oats and rye in an extraction solvent, an extraction volume of any functional ingredients is adjusted by producing the extraction solution from the processed seeds which are obtained by changing conditions for processing seeds.

In order to achieve the above-mentioned object, as described claim 8, there is also provided a processed product or processed products of wheat, barley, Data and rye processed by processing the method as claimed in claims 1-7.

According to claim 8, by utilizing the processing method in claims 1-7, the processing method of processed products of wheat, barley, oats and rye, in which functional ingredients contents such as free amino acids like GABA and dietary fibers can be increased, can be provided.

In order to achieve the above-mentioned object, as described claim 9, there in also provided a food or foods using the processed products of wheat, barley, oats and rye as claimed in claim 8.

By using the processed products of wheat, barley, oats and rye as claimed in claim 8, foods, in which functional ingredients contents such as free amino acids like GABA and dietary fibers can be increased, can be provided.

As mentioned above, it is possible to provide processed products of wheat, barley, oats and rye and its processing method, in which any functional ingredients are increased with balanced, and originally physical properties and quality that are demanded by inhibiting activity of an unnecessary enzyme are held. Thereby, foods which are produced by processed products of wheat, barley, oats and rye and its processing method with the increased such functional ingredients content can be provided.

Other objects, features and advantages of the present invention will become more apparent from the following detailed description.

### BRIEF DESCRIPTION OF THE DRAWINGS

Fig. 1A is a figure showing a change of the GABA and other free amino acids contents during the soaking process and germination process;
Fig. 1B is a figure showing a change of the GABA and other free amino acids contents during the soaking process and germination process;
Fig. 2 is a figure showing a change of the protease activity during the soaking process and germination process;
Fig. 3 is a figure showing a change of the GABA and other free amino acids contents due to the water temperature during soaking process;
Fig. 4 is a figure showing the CABA and other free amino acids contents due to the soaking method and the soaking time of Haruna Nijo;
Fig. 5 is a figure showing the GABA and other free amino acids contents due to the soaking method and the soaking time of malting barley in North America;
Fig. 6 is a figure showing a change of the dietary fibers (β-glucan) content in the germinated barley;
Fig. 7 is a figure showing a change of the dietary fibers (β-glucan) content during the soaking process;
Fig. 8 is a figure showing a change of the dietary fibers (β-glucan) content during the soaking process;
Fig. 9 is a figure showing a change of the dietary fibers (β-glucan) content during the soaking process;
Fig. 10 is a figure showing a change of the dietary fibers (β-glucan) content during the soaking process;
Fig. 11 is a figure that shows an influence that dry temperature against to malt of 3 days of germination effects the GABA and other free amino acid contents;
Fig. 12A is a figure that shows an influence that the gibberellin process affects to the GABA and other free amino acid contents;
Fig. 12B is a figure that shows an influence that the gibberellin process affects to the GABA and other free amino acid contents;
Fig. 13A is a figure showing the GABA and other free amino acids contents at different extraction temperatures;
Fig. 13B is a figure showing the GABA and other free amino acids contents at different extraction temperatures;
Fig. 14 is a figure that shows an influence that the extraction temperature of 30 minutes processing affects to the GABA and other free amino acid contents;
Fig. 15 is a figure that shows an influence that the extraction temperature of 60 minutes processing affects to the CABA and other free amino acid contents;
Fig. 16 is a figure showing the dietary fibers (β-glucan) content in the extraction solution;

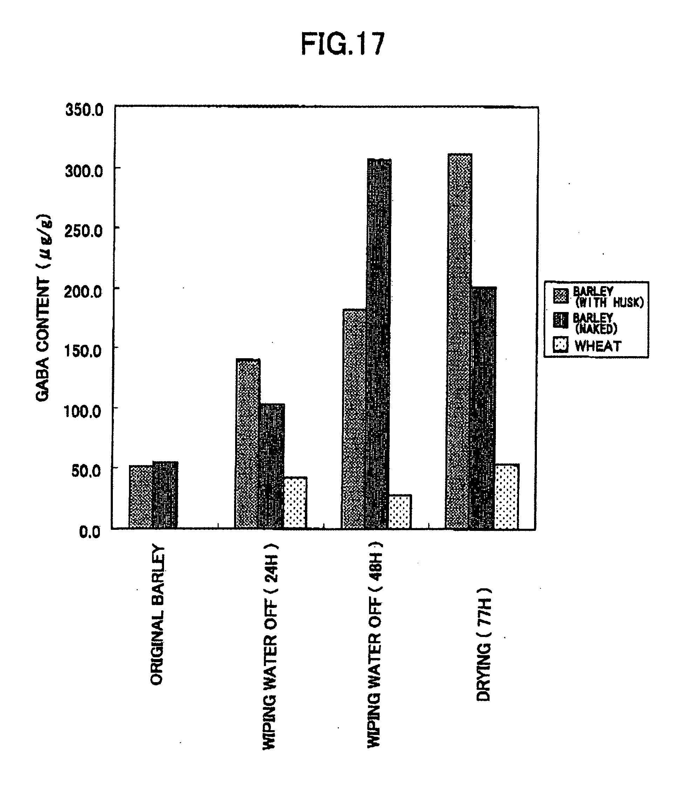

Fig. 17 is a figure showing the GABA content after 48 hours for the soaking process of malting and food barley in Japan and Norin 61;
Fig. 18 is a figure showing outer appearances of Udon (Japanese noodle) which has mixed ratio of malt flour 0% and 20%; and
Fig. 19 is a figure showing an outer appearance of Soba-like noodle (Japanese noodle).

### DESCRIPTION OF THE PREFERRED EMBODIMENTS

A description will now be given, with reference to the embodiments according to the present invention. It is recognized that functional ingredients contents of GABA, other free amino acids and dietary fibers like β-glucan included in seeds of wheat, barley, oats and rye depend on its processing methods and its processing conditions, and the large increase or decrease of functional ingredients contents is occurred. Even though same processing condition is processed, a changing tendency is different (that is, functional ingredient A content is increasing, but functional ingredient B content is decreasing) due to each functional ingredient, thus it is recognized that the most suitable processing method or a degree of processing in need to be set depending on functional ingredient which allow to be high content. Then, the present invention was established by inventors of the present invention.

According to the characteristics of the present invention, seeds of wheat, barley, oats and rye are processed in below processing methods, then further processing conditions for the process is varied and the changing of functional ingredients contents in seeds is checked. Thus, processing method and its processing condition that any functional ingredients contents are increased can be provided.
(1) soaked products which seeds of wheat, barley, oats and rye are soaked in water or hot water in predetermined time period, or dried products of the soaked products or flours the soaked products which is powdered after the drying process.
(2) germinated products in which the soaked products of (1) is processed with germination and obtained by changing the processing time of the germination process.
(3) dried products in which the soaked products of (2) is dried in predetermined time period and obtained by changing the processing temperature of the drying process.
(4) processed products in which the soaked products of (1) are processed with the gibberellin process.
(5) processed products in which seeds of wheat, barley, oats and rye are soaked in water or hot water including the gibberellin with predetermined time period.
(6) extracted products in which seeds of wheat, barley, oats and rye or processed seeds obtained by processing the seeds (for example, the soaking process in water or hot water, germination process of the soaked seeds, or further the drying process after the germination process of the soaked seeds) are soaked in the extraction solvent and functional ingredients are extracted from the seeds, then the extracted products are obtained by changing the temperature of the extraction solvent.
(7) extracted products obtained from the processed seeds of the above (6) in which the extracted products are obtained using processed seeds produced by changing conditions of the process.

The present invention will be explained more detail with below embodiments for each (1)-(7).

Here, in the below, the present invention is explained for using barley seeds (type : Haruna Nijo).

### First Embodiment

The measurement with progress of time of functional ingredients of barley processed products produced by the soaking process and the germination process of barley seeds.

The soaking process of barley seeds (Haruna Nijo) was repeated 4 times (totally, 48 hours) with a series of processes (totally, 12 hours) in which after barley seeds was soaking in water of 15 °C, then barley seeds were taken up from the water and left (wipe water off) in the atmosphere of 15 °C for 7 hours. Thus, seeds including water were treated in freeze-dry process, then the seeds were powdered as sample for measurement. The sample of 50mg/800microliter water was shaken overnight at 5 °C, then the functional ingredients contents were measured with amino acids analyzer (Nihon-Denahi).

Then, seeds with the soaking process were processed with germination. The germination was processed in the atmosphere of 15 °C, the amino acid analysis was measured every single day from the first germinated day to the sixth germinated day.

Here, each germinated sample was treated with freeze-dry processed, then samples were powdered. The sample of 50mg/800mioroliter water was shaken overnight at 5 °C, then the functional ingredients contents were measured with the amino acids analyzer (Nihon-Denshi).

On the other hand, basically, the above soaking process is the same process as soaking process of barley for producing malts for brewing from barley.

That is, the wipe water off process of the present invention is performed in order to increase the absorbing quantity of water in seeds.

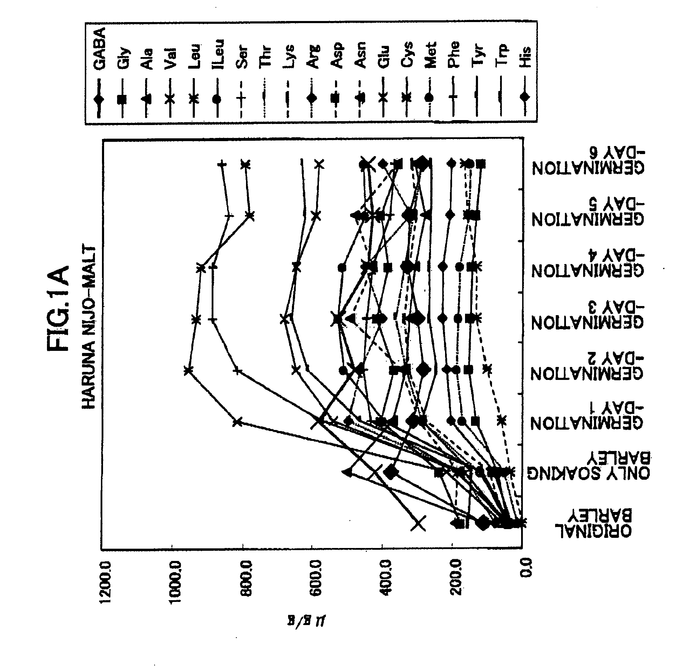

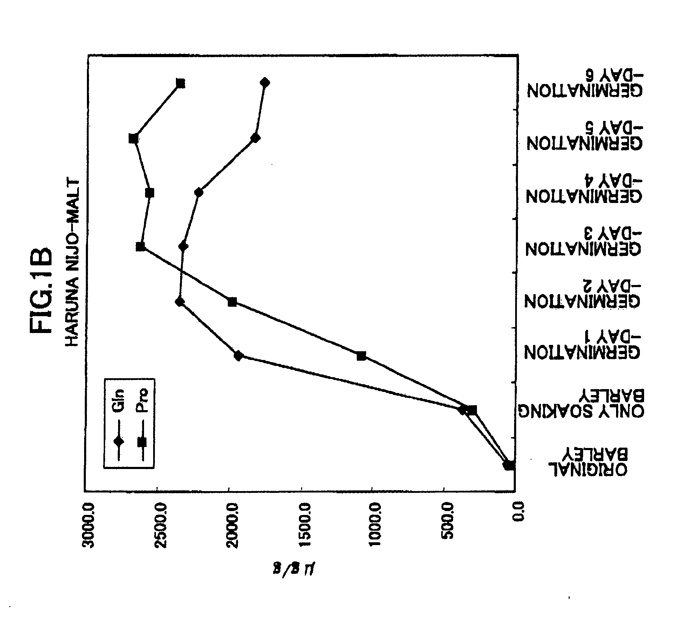

The result of its measurement is shown in figure 1. According to figure 1, based on the soaking process; that is, based on each free amino acid content during the soaking process to the germination process of seeds, it is recognized that every free amino acid content is increased compared to those of seeds before the soaking process. Especially for GABA, on the other hand, the germination process after the soaking process decreases the GABA content in seeds.

Also, leucine and glutamine have maximum contents at 2 days of the germination process, for example. Thus, based on the free amino acids contents, it is appropriated that the germination process is terminated at 2 days of the germination process. For other free amino acids, the free amino acids contents are increasing after 1 day of the germination, but a germination time when germinated seeds including the highest free amino acids contents depends on each free amino acid, thus the germination time is different for each free amino acid (see figure 1). Therefore, it is possible that any targeted free amino acid content in malts can be increased due to the termination of the germination at the appropriate days of germinated seeds.

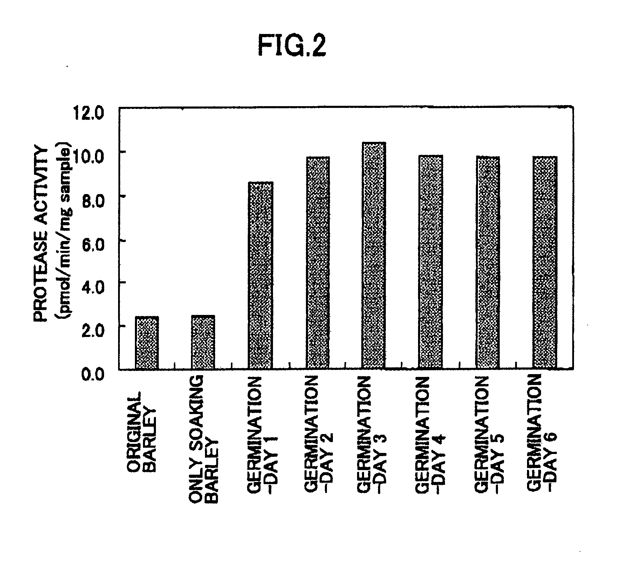

Similarly, a change of protease activity in the processed barley seeds was measured with progress of time. As a result, it was recognized that the protease activity was remarkably increased from day 1 of the germination after the soaking process and the protease activity reaches to the highest peak at day 3 of the germination. (see figure 2) Figure 2 shows a change of the protease activity during the soaking process and the germination process. Also, the dietary fibers decomposition enzyme activity was remarkably increased from day 1 of the germination similarly. According to the above results, it was recognized that the germinated products which are processed with the germination process within 1-3 days are more preferable in order to obtain the barley processed products which has high GABA content and high activity of protease. Otherwise, it is recognized that the barley seeds which are processed with the soaking process are preferable in order to obtain the barley processed products which has high GABA content and low activity of protease and dietary fibers decomposition enzyme.

Also, the same result is shown in the soaked and germinated wheat, thus it is recognized that this idea is applicable to not only barley but also every species of wheat, barley, oats and rye.

Also, we investigated an effect against the free amino acids oontents in seeds that is caused by water temperature during the soaking process. After seeds were soaked in water (water temperature is 5-60 °C) for 12 hours, the obtained seeds including water were treated in freeze-dry process, then the seeds were powdered as sample for measurement. The sample of 50mg/800microliter water was shaken overnight at 5 °C, then the functional ingredients contents were measured with the amino aoida analyzer (Nihon-Denshi).

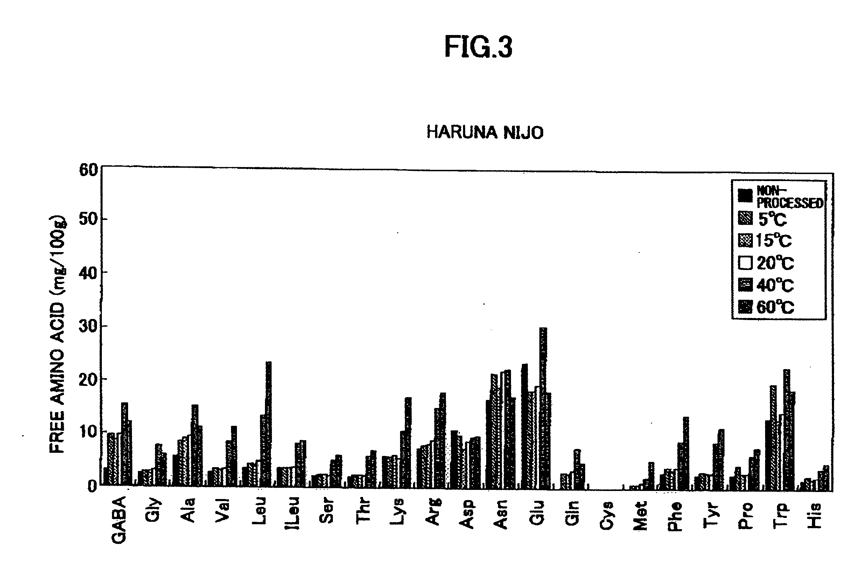

As a result, each CABA, Ala and Glu contents in the processing of seeds became the highest at the soaking condition under 40 °C of water. Leu, Ileu and Arg contents were increased with increasing of temperature and its highest content became at 60 °C of water. Also, Asn and Trp contents became the most highest at 40 °C, but high contents are also observed with condition at low temperature (5 °C). (see figure 3)

Next, we investigated an effect against the free amino acids contents in seeds that is caused by the soaking method and the soaking time of seeds of wheat, barley, oats and rye.

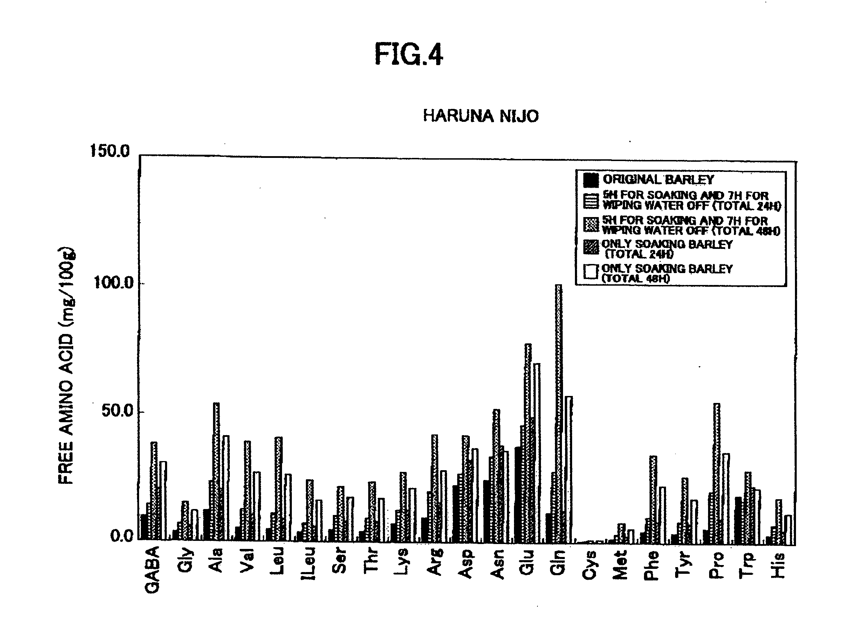

For Haruna Nijo, we compared with two soaking method, that is, the soaking process shown in embodiment 1 (soaked in 5 hours / wiped water off for 7 hours) and only the soaking process. In both methods, the soaking time sets 24 hours and 48 hours. The result of the measurement is shown in figure 4.

In the case of the process for soaking in 5 hours / wiped water off for 7 hours and the soaking process only, the GABA content was increased for both processes for long soaking (48 hours), but it is recognized that only the Asn content is increased at 24 hours soaking process for the soaking process only. Also, in the case of 24 hours soaking process, the GABA content is more increased in the soaking process only than the process for soaking in 5 hours / wiped water off for 7 hours, Also, in the case of 48 hours soaking process, the GABA content is more increased in the process for soaking in 5 hours / dehydrated for 7 hours than the soaking process only.

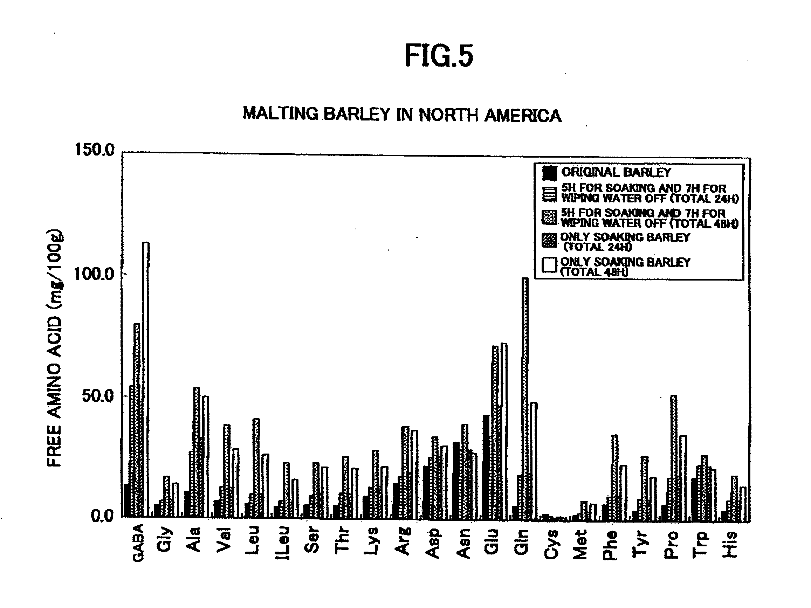

Instead of Haruna Nijo, the same investigation described above was performed using malting barley in North America (with husk) as a sample. The result is shown in figure 5.

Similar to Haruna Nijo, in the case of the process for soaking in 5 hours / wiped water off for 7 hours and the soaking process only, the GABA content is increased for both processes for long soaking (48 hours), but it is recognized that only the Asn content is increased at 24 hours soaking process for the soaking process only.

On other hand, in the case of 24 hours soaking process, the GABA content was more increased in the process for soaking in 5 hours / wiped water off for 7 hours than the soaking process only. Also, in the case of 48 hours soaking process, the GABA content was more increased in the soaking process only than the process for soaking in 5 hours / wiped water off for 7 hours. This result has an opposite tendency to that of Haruna Nijo.

In any cases, it was recognized that the free amino acids contents can be changed freely by adjusting the soaking method and the soaking time of seeds.

### Second Embodiment

The measurement with progress of time of the dietary fibers content during the producing process of the germinated barley.

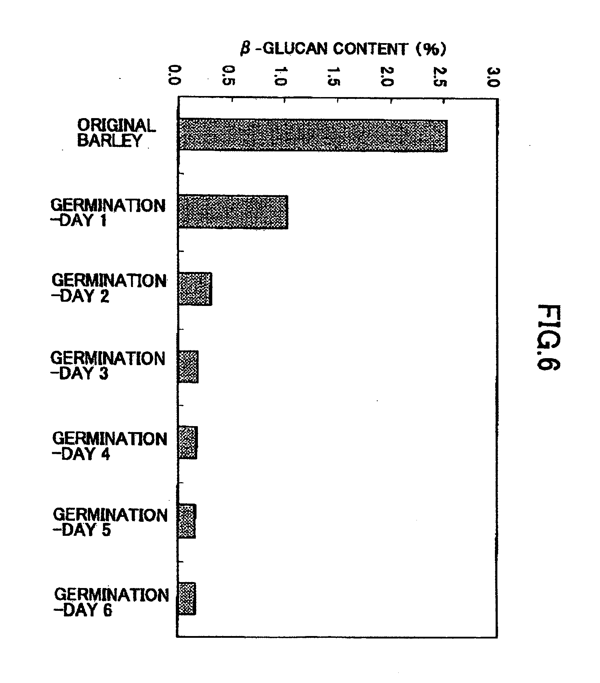

The dietary fibers (β-glucan) content during the producing process of the germinated barley was measured with progress of time. This process was same as that of malt producing process. After barley seeds absorbed water in itself, the seeds allowed to be germinated at 15 °C, and a sampling was performed at every step (germination days 1-6). In addition, after freeze-dry processing of samples, then samples were powdered and sample of 25mg/750mioroliter soaked in hot boiling water for 1 hour and it was shaken regularly. Then, after obtained samples were centrifuged, a supernatant fluid was analyzed with FIA method, and the β-glucan content, in which β-glucan is more than 100kD of molecular weight, was measured. The result of its measurement is shown in figure 6.

As shown in figure 6, it is clear that the β-glucan content is remarkably decreased after day 1 of germination, and it was recognized that the highest β-glucan content was for the non-germinated seeds.

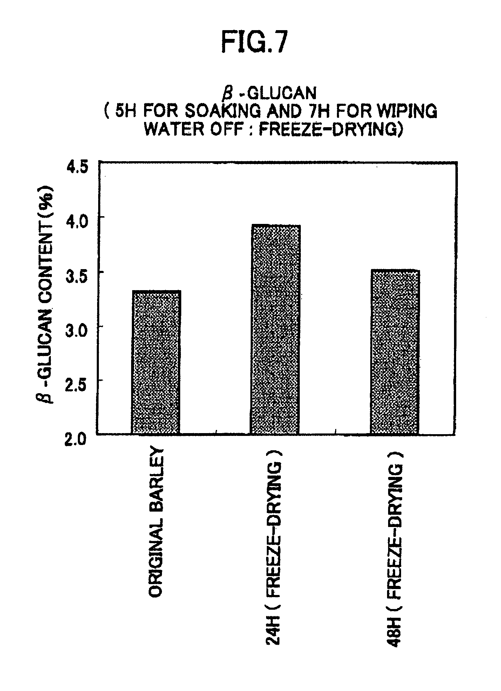

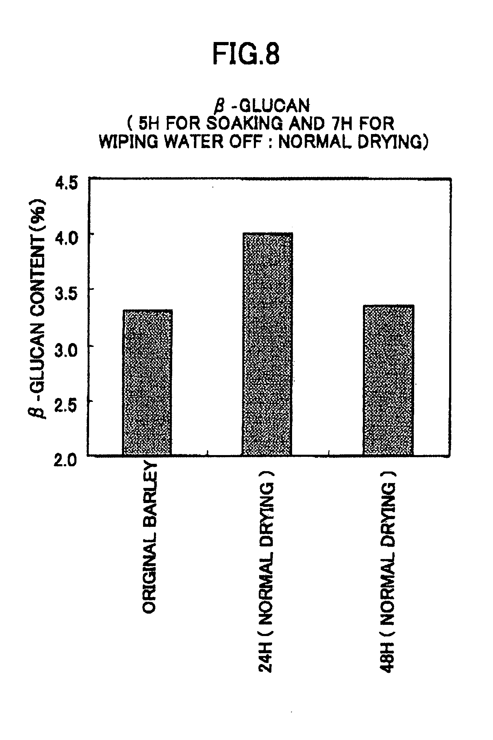

Next, during the producing process of the germinated barley, a water absorbing was performed, That is, barley was soaked in water, and it was measured how the β-glucan content changes when altering its soaking condition. Samples which were used in this measurement were prepared with same process. After barley seeds were soaking in water of 15 °C for 5 hours, then barley seeds were taken up from water and left (wipe water off) in the atmosphere of 15 °C for 7 hours. This series of processes was repeated 2 times (24 hours) and 4 times (48 hours), then each freeze-dried sample was used. The result of its measurement is shown in figure 7. Instead of freeze-dried samples, samples which were dried with hot breese were also measured. The result of its measurement is shown in figure 8.

As a result, it was recognized that the β-glucan content was more increased in the barley which had soaking process than the barley which had non-process. It was recognized that the β-glucan content was also changed when altering the soaking time (repeat times of the process). On the other hand, there was no difference between results even though different drying processes after the soaking process were performed.

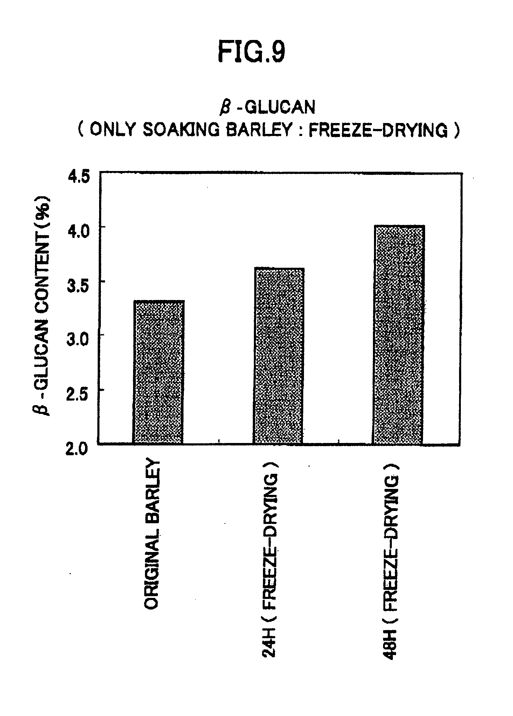

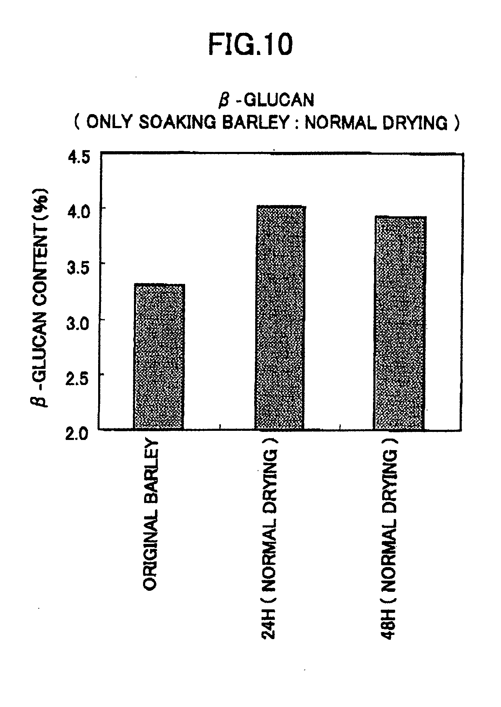

Next, figures 9 and 10 show comparison of the β-glucan content in barley when the water absorbing method in the process of producing the germinated barley was altered to the soaking process only (after soaking, no wipe water off), and the soaking time and the drying method were altered. That is, basically, there was no change between them, it was recognized that the β-glucan content was more increased in seeds with the water absorbing process than seeds of pre-processing. Also, it was recognized that the β-glucan content can be changed freely by adjusting its soaking time. In addition, after the water absorbing process, for the freeze-dried samples, there was a tendency that the β-glucan content was more increased when the soaking time was increased.

As results of embodiments 1 and 2, it is possible that foods, in which decomposition (allow to low molecules) of protein and dietary fibers during the food processing be restricted, and GABA, free amino acids and dietary fibers contents are increased, can be produced by using malt with only the soaking process as materials for foods.

### Third Embodiment

An effect that the dry temperature influences to the free amino acid content

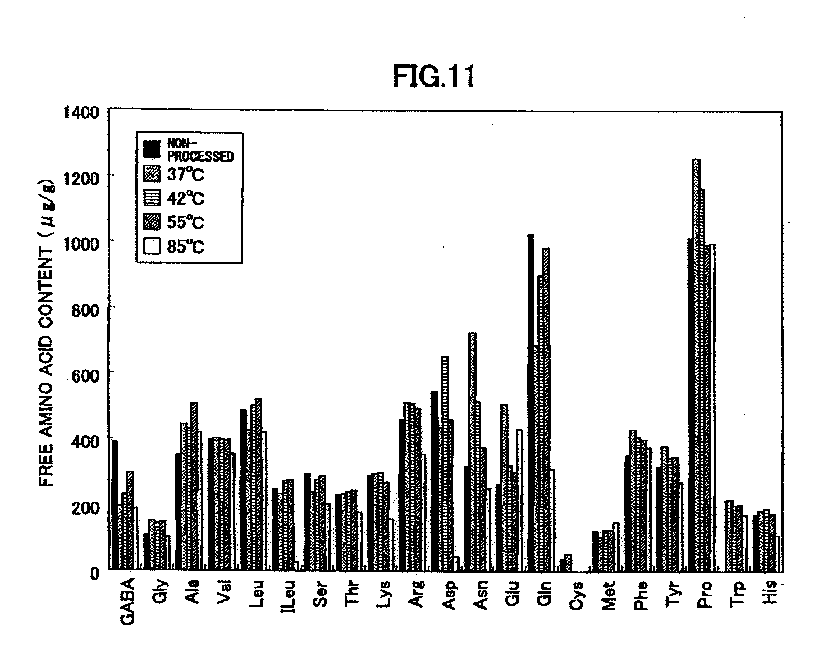

The drying process after germination waa performed at different temperatures, and free amino acids contents in malts were measured. Here, basically, the drying process was same method as a roast-drying process for producing malts for brewing from barley. We performed a comparison experiment between freeze-dried sample without heat and sample with heat of 37 °C, 42 °C, 55 °C and 85 °C. As a result, it was clear that free amino acid contents were greatly influenced by temperature. Also, temperatures for the highest amino acids content are different for each. The freeze-dried process without heating leaded the highest GABA, leucine and glutamine content. In the case of heating process, the highest GABA, leucine and glutamine contents were at 55 °C. Also, the highest glutaminic acid and proline contents were at 37 °C. (see figure 11) The figure 11 shows an influence that dry temperature against to malt of 3 days of germination affects the GABA and other free amino acid contents. According to figure 11, GABA and other free amino acid contents in targeted malt can be adjusted by controlling the drying process. Especially for GABA, in the case of drying with heat, it is appropriated that the drying process is at 55 °C which shows the maximum GABA content.

### Fourth embodiment

An effect that the gibberellin process influences to the free amino acid content

As a decomposing process for malt, it is reported that a decomposition (allow to low molecules) of seed storage substance are promoted by using the gibberellin as a plant hormone during the soaking process and the germination process. Thus, the gibberellin process was performed on the germinated seed (Haruna Nijo) right after the soaking process, then after producing malt (day 6 of germination including the drying process), free amino acids contents were measured.

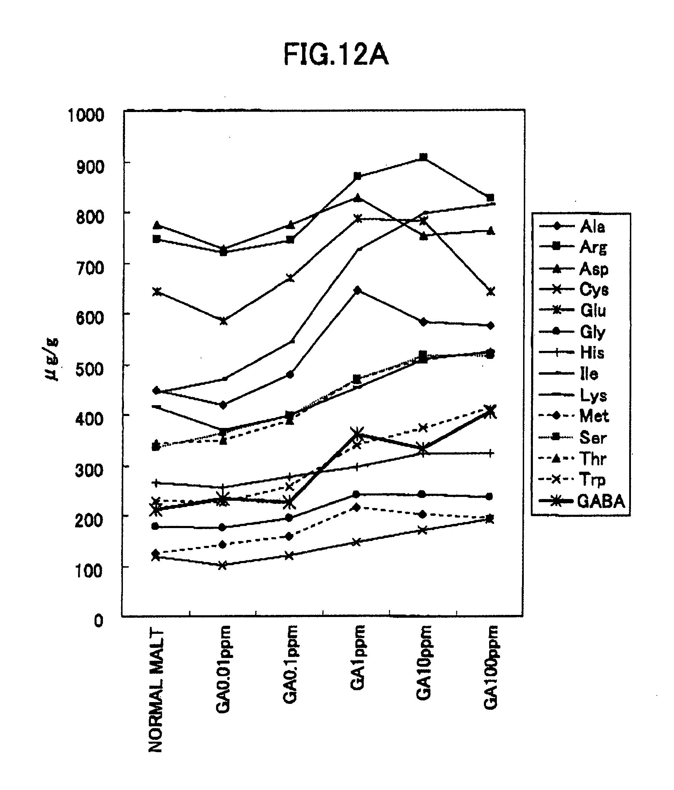

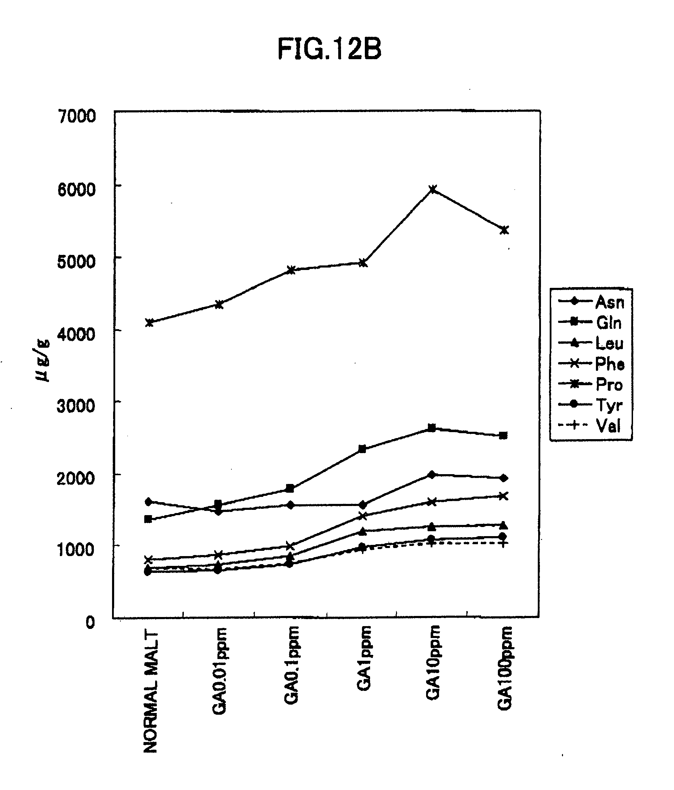

As a result, there was a tendency for all of free amino acid that free amino acids contents were increased by the gibberellin process, but the highest density of the gibberellin process was different depending on each amino acid. (see figure 12) Also, the GABA content was remarkably increased at 1ppm of the density of the gibberellin process. Figure 12 shows an influence that the gibberellin process affects to the GABA content and other free amino acids contents. According to the result of figure 12, the targeted free amino acids contents can be increased by processing with the gibberellin in an appropriate density during the soaking process and the germination process.

### Fifth embodiment 5

An effect that an extraction condition from malt influences to free amino acids contents in an extraction solution

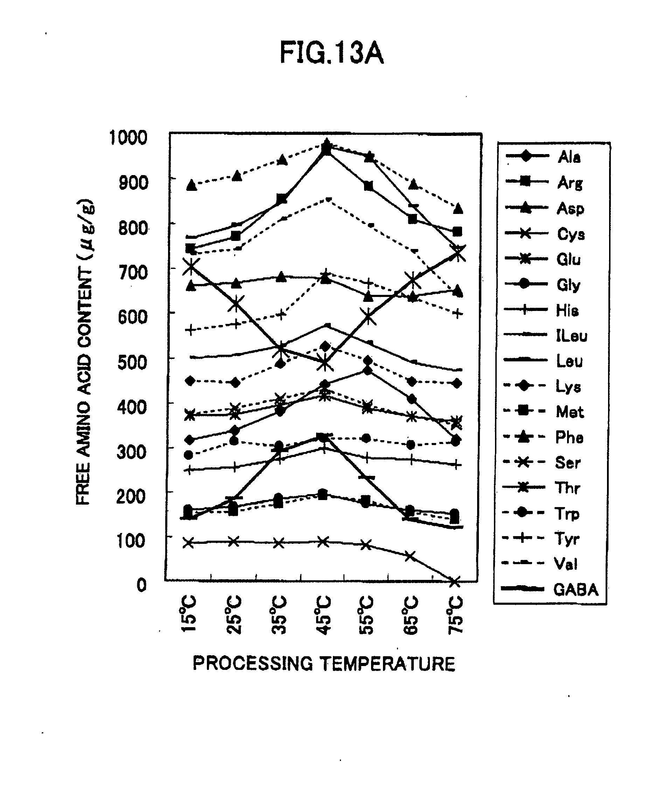

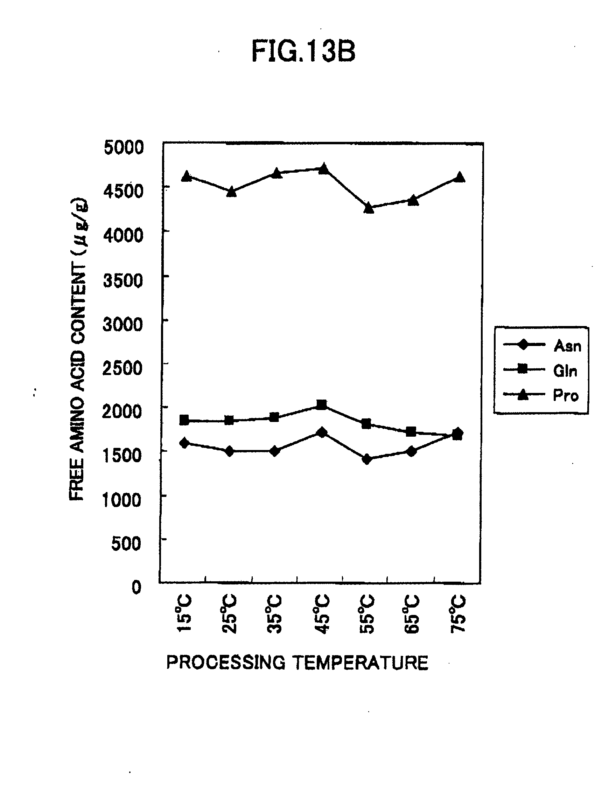

Amino acid extraction conditions from malt of germinated barley were examined, and an effect that an extraction temperature influences to free amino acids contents in the extraction solution was measured. The extraction was performed by soaking the powdered malt of germinated barley into water with predetermined temperature. The extraction was performed for 30 minutes at 15 °C, 25 °C, 35 °C, 45 °C, 55 °C, 65 °C and 75 °C as temperature conditions. The highest temperature for extraction efficiency was different depending on each amino acid. The highest values for most free amino acids like GABA and proline were at the extraction condition of 45 °C for 30 minutes, but the glutamic acid content which is a taste ingredient was increased at low or high temperature conditions and the lowest value was at 45 °C. (see figure 13) Because GABA is ayntheaiaed from glutamic acid, a relationship between the GABA content and the glutamic acid content at 45 °C is logically accordance. Figure 13 shown the GABA content and other free amino acids contents at different extraction temperatures. According to this result, the targeted free amino acids contents in the extraction solution can be increased by controlling the extraction process.

Amino acid extraction conditions were examined from not only processed products of wheat, barley, oats and rye but also seeds itself of wheat, barley, oats and rye, and an effect that an extraction temperature and an extraction time influence to free amino acids contents in the extraction solution was measured. The extraction was performed by soaking the powdered barley seeds into water with the predetermined temperature. The extraction was performed for 30 minutes at 25 °C, 35 °C, 45 °C, 55 °C and 65 °C as temperature conditions. For 35 °C, 45 °C and 55 °C, other extractions were performed for 60 minutes.

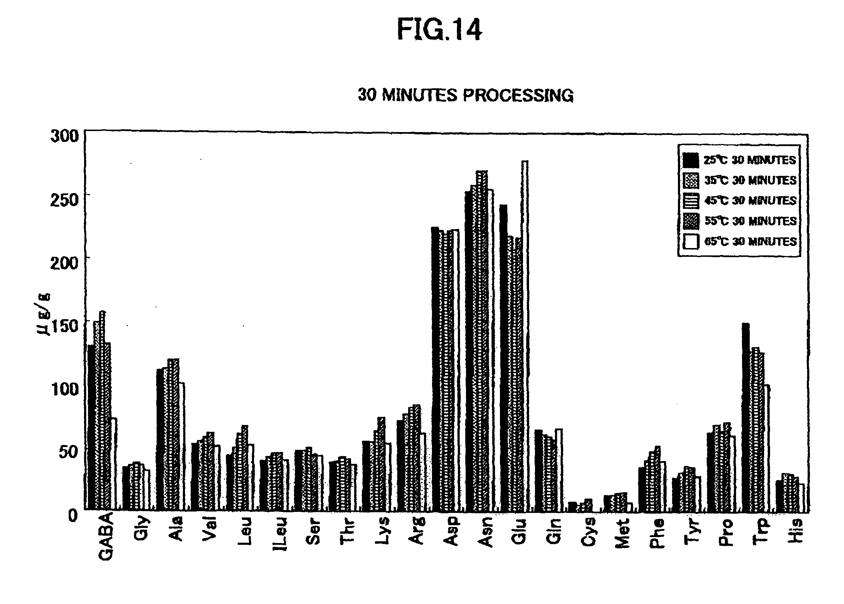

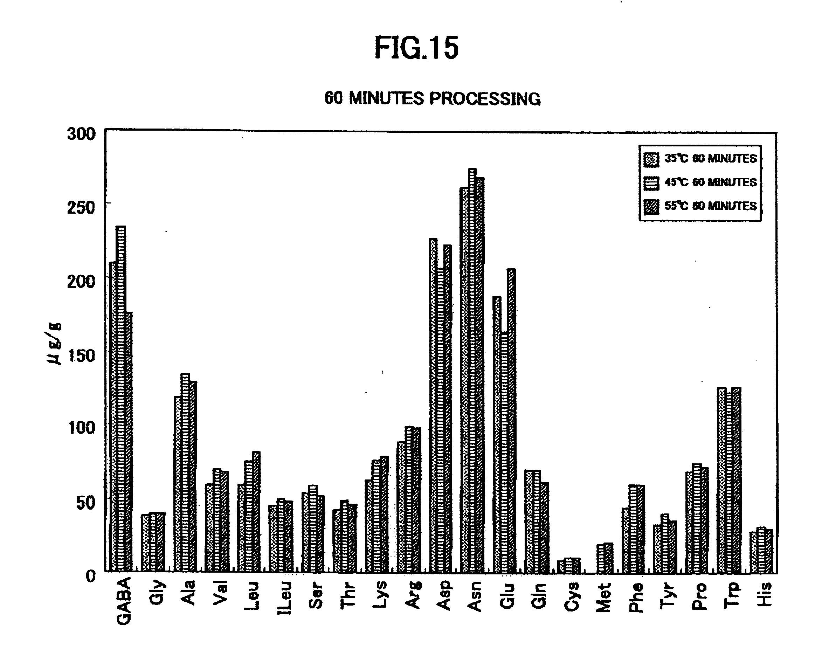

As a result, same as processed products of wheat, barley, oats and rye, the highest GABA content was at 45 °C for both of 30 minutes process and 60 minutes process. Also, the GABA content for 60 minutes process was higher than that of 30 minutes process. For other free amino acids, for example, the highest Glu content was at 60 °C, but the Glu content of 30 minutes extraction time was higher than that of 60 minutes extraction time. On the other hand, the highest Trp content was at 60 °C process. (see figures 14 and 15)

According to the above results, in the case of non-prooessed seeds of wheat, barley, oats and rye, it was clear that the targeted free amino acids contents in the extraction solution can be increased by controlling the extraction process as well as wheat processed product.

In addition, an effect that an extraction conditions from the germinated barley influences to the β-glucan content in the extraction solution was investigated.

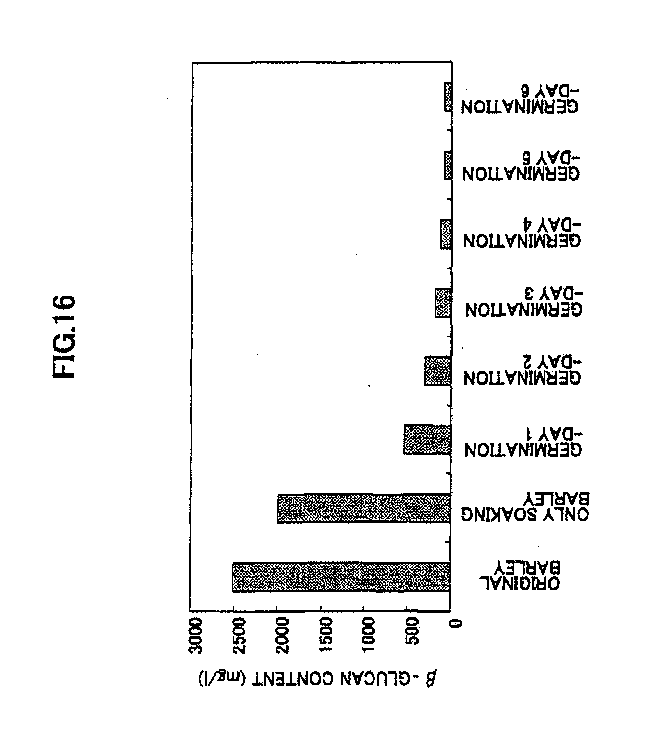

Here, an extraction conditions of β-glucan from the germinated barley was investigated, and an effect that an processing conditions influences to free amino acids contents in the extraction solution was measured. The extraction was performed by shaking the powdered barley which were germinated in different days with water (water was heated from 45 °C to 70 °C for 115 minutes). According to the above experiment, it was recognized that the extraction solution of β-glucan with high density of β-glucan can be produced for the germinated barley with only the soaking process as well ae barley itself. (see figure 16) Figure 16 shows the β-glucan content in the extraction solution.

### Sixth embodiment

The measurement with progress of time of the GABA content by the soaking process for other types of barley and wheat

In this embodiment, based on the result of the first embodiment, the change with progress of time of the GABA content by the soaking process and the drying process for food barley in Japan (without husk, naked type) and Norin 61 (wheat) other than Haruna Nijo used in the above embodiments 1-5 were measured in detail. The soaking process was performed at 15 °C, then a process (totally, 12 hours) comprising 5 hours for soaking and 7 hours for wiping water off was repeated 4 times (totally, 48 hours), after that, the drying step for 29 hours was performed (heated from 55 °C to 83 °C). After powdering samples, the amino acid analysis was performed as well as the first embodiment.

As a result, the GABA content for Haruna Nijo (barley, with husk) was drastically increased. After that, the GABA content was increased or decreased in the soaking process, the highest GABA content was at 29 hours after drying process. Compared with food barley in Japan (without husk, naked type) and Norin 61 (wheat), the GABA content was increased in the soaking process for any samples, but the highest GABA content was at 40 hours after the soaking process for food barley in Japan (without husk, naked type), then, the GABA content was decreased after the drying process. Compared to barley, the GABA content in wheat was low during every process for investigation. For free amino acids other than GABA, patterns of increasing or decreasing were different depending on each amino acid as well as the first embodiment.

Not limited to barley, results of the first embodiment and the sixth embodiment shows that the targeted free amino acids contents in seeds can be increased by stopping the soaking process with appropriate time for needs in every type of wheat, barley, oats and rye.

### Seventh embodiment

Foods using processed products of wheat, barley, oats and rye produced by controlling seeds of wheat, barley, oats and rye and its processing method

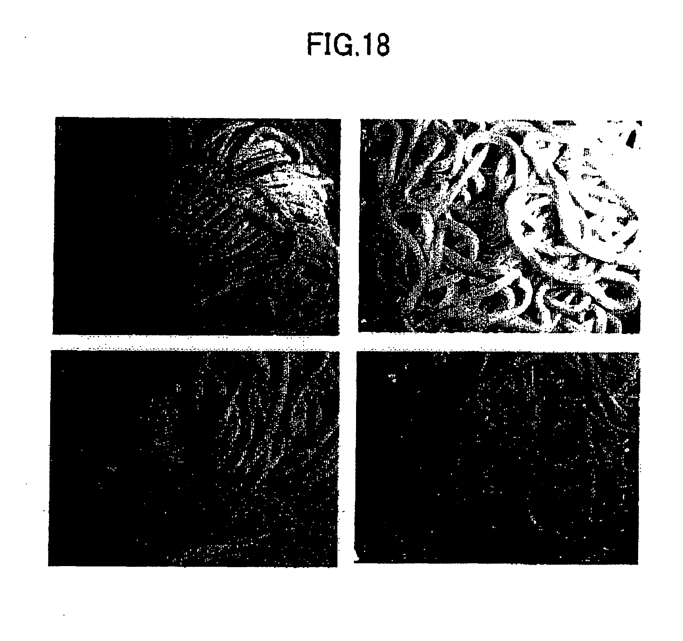

According to the present invention, Udon was produced with a conventional method using malt flour powdered with malt by the soaking process only. Comparison examples were performed using 0% and 20% of malt flour combination ratio to middle typed flour. In the case of 20% of malt flour combination ratio, there were no different characteristics between them other than outer appearance of color, and there were same characteristics as Udon after boiling (see figure 18). Also, in the case of 50% of malt flour combination ratio, there were same characteristics as Udon as well as the case of 20% of malt flour combination ratio. Figure 18 shows outer appearances of Udon which has mixed ratio of malt flour 0% and 20%. In figure 18, the upper left shows Udon with 0% of malt flour (after cutting noodles), the lower left shows Udon with 20% of malt flour (after cutting noodles), the upper right shows Udon with 0% of malt flour (after boiling), the lower right shows Udon with 20% of malt flour (after boiling noodles). Therefore, the Udon can be produced by using malt which has low protease activity and has processed with only the soaking process as a material for Udon, and during its Udon producing process, a decomposition (allow to low molecules) of gluten as protein of wheat flour can be restricted and the Udon which has not only appropriate feeling of chewing can be produced but also includes lots of GABA and other free amino acids. Moreover, it was recognized that these raw materials has same effect as well as for producing bread.

Comparison examples were performed for Soba. Soba were produced with a conventional method using 60% of Soba flour and 40% of wheat flour, and 60% of Soba flour and 20% of wheat flour and 20% of malt flour. In the case of 20% of malt flour, there were no different characteristics between them, and there were same characteristics as Soba.

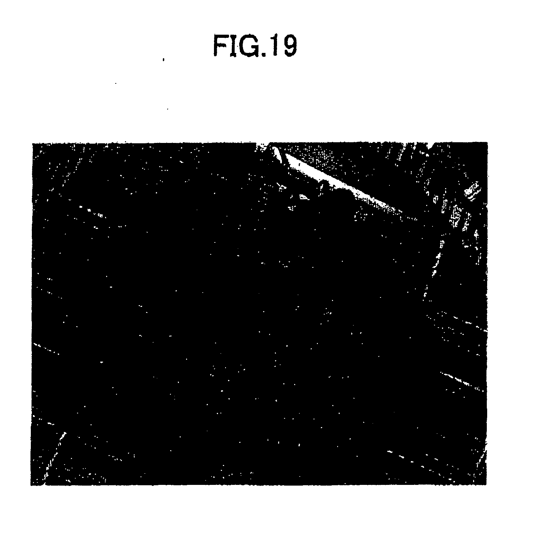

Also, a Soba-like noodle as new noodle which has 50% of wheat flour and 50% of malt flour was produced with a conventional method of Soba. As the result, Soba-like noodle which has no Soba flour and some appearance of color as soba could be produced. (see figure 19) Figure 19 shows an outer appearance of Soba-like noodle. It is no need to worrying about Soba-allergy because the Soba-like noodle does not use Soba flour. Also, the Soba-like noodle includes lots of GABA and other free amino acids.

In addition, pasta noodle and Chinese noodle which have 20-50% of malt flour were produced with a conventional method. As the result, there were same oharacteriatioa as original pasta noodle and Chinese noodle. Moreover, cakes such as cookies which have 20-50% of malt flour were produced with a conventional method. As the result, there were same characteristics as original cakes auoh as cookies.

The present invention is not limited to the specifically disclosed embodiments, and variations and modifications may be made without departing from the scope of the present invention.

The present application is based on Japanese priority application No.2003-413190 filed on December 11, 2003, the entire contents of which are hereby incorporated by reference.

## Claims

1. A processing method of processed products of wheat, barley, oats and rye,
**characterized** that seeds of wheat, barley, oats and rye are soaked in water or hot water for predetermined time.

2. A processing method of processed products of wheat, barley, oats and rye,
**characterized** that after seeds of wheat, barley, oats and rye are soaked in water or hot water for predetermined time, a germination process is performed, then any functional ingredients contents in seeds of wheat, barley, oats and rye are adjusted by controlling the germination process.

3. A processing method of processed products of wheat, barley, oats and rye,
**characterized** that after seeds of wheat, barley, oats and rye are soaked in water or hot water for predetermined time, a drying proceaa is performed at predetermined temperature, then any functional ingredients contents in seeds of wheat, barley, oats and rye are adjusted by controlling the temperature of the drying process.

4. A processing method of processed products of wheat, barley, oats and rye,
**characterized** that after seeds of wheat, barley, oats and rye are soaked in water or hot water for predetermined time, a gibberellin process is performed.

5. A processing method of processed products of wheat, barley, oats and rye,
**characterized** that seeds of wheat, barley, oats and rye are soaked in water or hot water which are included the gibberellin for predetermined density.

6. A processing method of processed products of wheat, barley, oats and rye,
in which an extraction solution extracted functional ingredients from seeds of wheat, barley, oats and rye is produced by soaking seeds of wheat, barley, oats and rye or an processed seeds obtained by processing the seeds in an extraction solvent, an extraction volume of any functional ingredients are adjusted by controlling the temperature of the extraction solvent.

7. A processing method of processed products of wheat, barley, oats and rye,
in which an extraction solution extracted functional ingredients from seeds of wheat, barley, oats and rye is produced by soaking an processed seeds obtained by processing seeds of wheat, barley, oats and rye in an extraction solvent, an extraction volume of any functional ingredients are adjusted by producing the extraction solution from the processed seeds which are obtained by changing conditions for processing seeds.

8. A processed product or processed products of wheat, barley, oats and rye processed by processing the method as claimed in claims 1-7.

9. A food or foods using the processed products of wheat, barley, oats and rye as claimed in claim 8.
